## Europäisches Patentamt

## European Patent Office

## Office européen des brevets

(19)

(11)  **EP 1 301 031 A1**

(12)  **EUROPÄISCHE PATENTANMELDUNG**

(43) Veröffentlichungstag:
  **09.04.2003  Patentblatt 2003/15**

(51) Int Cl.[7]: **H04N 5/217**, H04N 5/32

(21) Anmeldenummer: **02102385.8**

(22) Anmeldetag: **26.09.2002**

(84) Benannte Vertragsstaaten:
  **AT BE BG CH CY CZ DE DK EE ES FI FR GB GR IE IT LI LU MC NL PT SE SK TR**
  Benannte Erstreckungsstaaten:
  **AL LT LV MK RO SI**

(30) Priorität: **06.10.2001  DE 10149404
  29.09.2001  DE 10148371**

(71) Anmelder:
  • **Philips Corporate Intellectual Property GmbH
  52064 Aachen (DE)**
  • **Koninklijke Philips Electronics N.V.
  5621 BA Eindhoven (NL)**

(72) Erfinder:
  • **Wischmann, Hans-Aloys
  52088, Aachen (DE)**
  • **Overdick, Michael
  52088, Aachen (DE)**
  • **Schmidt, Ralf
  52088, Aachen (DE)**
  • **Visser, Roelant
  52088, Aachen (DE)**

(74) Vertreter: **Volmer, Georg, Dipl.-Ing. et al
  Philips Corporate Intellectual Property GmbH,
  Postfach 50 04 42
  52088 Aachen (DE)**

(54)  **Verfahren zur Korrektur unterschiedlicher Umwandlungscharakteristiken von Bildsensoren**

(57)    Die Erfindung betrifft ein Verfahren zur Korrektur bzw. zum Ausgleich individueller Unterschiede in den Umwandlungscharakteristiken der Bildsensoren (11) und der daran angeschlossenen Verarbeitungseinheiten (12) eines Röntgendetektors. Dabei wird angenommen, dass zwischen der in den Detektor eintretenden Strahlungsmenge ($\varphi$) und dem für ein Pixel (j, i) hieraus resultierenden Grauwert (GW) ein funktionaler Zusammenhang gemäß $GW = F_i(L_{ij}(\varphi))$ besteht, wobei $L_{ij}$ das annähernd lineare Verhalten der Sensoranordnung (10) und $F_i$ das nichtlineare Verhalten der Verarbei-tungseinheit (12) beschreibt. Für die Inverse $L_{ij}^{-1}$ wird dann eine lineare und für die Inverse $F_i^{-1}$ eine nichtlineare Modellfunktion mit Parametern angesetzt, wobei die Parameter aus Kalibrierungsmessungen mit unterschiedlichen Strahlungsmengen ($\varphi_k$) berechnet werden können. Beim späteren Betrieb des Detektors können dann diese Modellfunktionen auf die erhaltenen Grauwerte (GW) angewendet werden, um diese mit hoher Genauigkeit und in Echtzeit zu korrigieren, wobei vorteilhafterweise der Speicherbedarf durch die Verwendung einer einzigen nichtlinearen Inversen pro Spalte gering ist.

FIG.1

EP 1 301 031 A1

**Beschreibung**

Die Erfindung betrifft ein Verfahren zur Korrektur unterschiedlicher Umwandlungscharakteristiken bei der Verarbeitung der Signale von flächig verteilt angeordneten Bildsensoren. Ferner betrifft sie einen Röntgendetektor, welcher ein derartiges Verfahren ausführen kann.

In einer Fläche verteilt angeordnete Bildsensoren sind in verschiedenen Anwendungsfällen wie zum Beispiel elektronischen Kameras zu finden. Nachfolgend sollen stellvertretend flache dynamische Röntgendetektoren (FDXD) betrachtet werden, bei denen typischerweise mehrere tausend einzelne Bildsensoren (Pixel) matrixförmig in Zeilen und Spalten angeordnet sind. Die primären Bildsignale der Bildsensoren werden zeilenweise ausgelesen, so dass alle Bildsensoren einer Spalte von der Ausleseelektronik zeitlich nacheinander angesprochen werden. Die primären Bildsignale einer Spalte können daher (nacheinander) über dieselbe Verarbeitungseinheit geleitet werden. In den Verarbeitungseinheiten findet eine Verstärkung und Umwandlung der primären Bildsignale statt, wobei als sekundäre Bildsignale digitale Graustufenwerte (GW) erzeugt werden.

Bei den beschriebenen Röntgendetektoren tritt das Problem auf, dass jeder Bildsensor und jede Verarbeitungseinheit eine individuelle Kennlinie aufweist, so dass trotz Einstrahlung einer homogenen Strahlungsmenge auf alle Bildsensoren am Ausgang des Röntgendetektors unterschiedliche sekundäre Bildsignale vorliegen können. Um derartige individuelle Unterschiede in den Umwandlungscharakteristiken zu korrigieren, ist es aus der EP 1 081 942 A1 bekannt, eine (mehrdimensionale) lineare Abbildung zwischen den tatsächlich auf die Bildsensoren auftreffenden Strahlungsmengen und den am Ausgang bereitgestellten sekundären Bildsignalen (Graustufen) anzunehmen, welche die individuellen Unterschiede der Bildsensoren und Verarbeitungseinheiten beschreiben soll. Diese lineare Abbildung wird aus mehreren Kalibrierungsmessungen näherungsweise bestimmt. Ihre Inverse kann dann auf reale Messwerte angewendet werden, um die Unterschiede zwischen den einzelnen Bildsensoren zu kompensieren. Die Kalibrierungsmessung erfolgt dabei zum einen durch die Bestimmung eines Dunkelbildes, welches das Ausgangssignal ohne jegliche Bestrahlung wiedergibt ("Offset"). Zum anderen wird ein sogenanntes "Gainbild" berechnet, welches die individuellen Verstärkungen der einzelnen Kombinationen aus Bildsensor und Verarbeitungseinheit wiedergibt. Es zeigt sich jedoch, dass die mit einem derartigen Verfahren erreichbare Korrektur nicht ausreicht, um gerade bei speziellen Anwendungsfällen wie etwa der Digitalen Subtraktions-Angiographie (DSA) das Auftreten störender Artefakte zu verhindern.

Vor diesem Hintergrund war es eine Aufgabe der vorliegenden Erfindung, ein verbessertes Verfahren zur Korrektur der Bildsignale von flächig verteilt angeordneten Bildsensoren bereitzustellen, welches insbesondere in Anwendungsfällen wie der Digitalen Subtraktions-Angiographie eine gute Bildqualität gewährleistet und gleichzeitig in Echtzeit durchführbar ist.

Diese Aufgabe wird durch ein Verfahren mit den Merkmalen des Anspruchs 1 sowie durch einen Röntgendetektor mit den Merkmalen des Anspruchs 10 gelöst. Vorteilhafte Ausgestaltungen sind in den Unteransprüchen enthalten.

Das erfindungsgemäße Verfahren zur Korrektur unterschiedlicher Umwandlungscharakteristiken bei der Verarbeitung der Signale von flächig verteilt angeordneten Bildsensoren betrifft eine Situation, bei welcher

a) die einzelnen Bildsensoren jeweils mit einer ersten, individuellen Kennlinie aus einer vom Bildsensor empfangenen Strahlungsmenge ein primäres Bildsignal erzeugen, und

b) die primären Bildsignale von mehreren Bildsensoren (typischerweise Bildsensoren "einer Spalte" oder "Halbspalte") alle (nacheinander) derselben Verarbeitungseinheit zugeführt werden, wobei diese Verarbeitungseinheit eine individuelle zweite, nichtlineare Kennlinie aufweist und an ihrem Ausgang ein sekundäres Bildsignal erzeugt.

In einem vorbereitenden Schritt des Verfahrens werden dann für jeden Bildsensor bzw. jede Verarbeitungseinheit

c) die nichtlineare Inverse der oben genannten zweiten Kennlinie und die Inverse der ersten Kennlinie aus Kalibrierungsmessungen zumindest näherungsweise bestimmt.

Nach der Ermittlung dieser Inversen werden schließlich im laufenden Betrieb der Bildsensoren

d) die von den Verarbeitungseinheiten erzeugten sekundären Bildsignale mit den in Schritt c) gewonnenen Inversen transformiert.

Das geschilderte Verfahren verwendet somit eine nichtlineare Inverse für die Korrektur der sekundären Bildsignale und kann auf diese Weise eine höhere Genauigkeit erreichen als die aus dem Stand der Technik bekannten linearen Korrekturen. Dies hat bei Röntgendetektoren den überraschenden Effekt, dass auch in speziellen Anwendungsfällen wie etwa der Digitalen Subtraktions-Angiographie gute Bildqualitäten ohne störende Artefakte erzielt werden können. Gleichzeitig hat das erfindungsgemäße Verfahren durch seinen speziellen Ansatz den Vorteil, dass es sich mit begrenztem Speicher- und Rechenaufwand und daher in Echtzeit ausführen lässt. Die Begrenzung des Aufwandes wird dadurch erreicht, dass die Berücksichtigung einer Nichtlinearität auf die Verarbeitungseinheiten beziehungsweise deren zweite, nichtlineare Kennlinien begrenzt wird. Da mehrere Bildsensoren über dieselbe Verarbeitungseinheit laufen, kann deren nichtlineare Kennlinie präziser und mit höherer Stabilität der hierzu verwendeten Algorithmen bestimmt werden.

Bei dem Verfahren sind die Bildsensoren vorzugsweise in Zeilen und in dazu senkrechten Spalten angeordnet, wobei alle Bildsensoren derselben Spalte an eine gemeinsame Verarbeitungseinheit angeschlossen sind. Beim Auslesen eines derartigen Feldes von Bildsensoren werden nacheinander Auslesesignale an die Zeilen gelegt, so dass in jedem Schritt die Bildsensoren einer Zeile ausgelesen werden können. In der Praxis bestehen Detektoren in Richtung der Spalten oft aus zwei Hälften, so dass das vorliegende Verfahren jeweils für die "oberen" und "unteren" Halbspalten getrennt anzuwenden ist.

Bei den Kalibrierungsmessungen werden die Bildsensoren vorzugsweise einer homogenen Bestrahlung ausgesetzt, welche eine bekannte Strahlungsmenge pro Bildsensor zwischen Null und einem Maximalwert aufweist. Die bekannte Strahlungsmenge einerseits und die hieraus resultierenden sekundären Bildsignale andererseits stellen dann eine Menge von Abtastpunkten für die Abbildung zwischen Eingang und Ausgang der Sensoranordnung dar, aus der sich die gesuchten Inversen dieser Abbildung berechnen lassen.

Im Falle von Röntgendetektoren, deren Bildsensoren lichtsensitive Elemente (z.B. Photodioden) enthalten, kann die homogene Bestrahlung sowohl eine homogene Röntgenstrahlung sein als auch eine homogene Strahlung sichtbaren Lichtes, welches in den beteiligten Bildsensoren ebenfalls die Erzeugung von Bildsignalen hervorrufen kann. Bei dem sichtbaren Licht handelt es sich dabei vorteilhafterweise um sogenanntes "Rücklicht" oder "Rücksetzlicht" (Backlight, Reset-Light), welches von einer aus der Einfallsrichtung der Röntgenstrahlung gesehen hinter den lichtsensitiven Elementen gelegenen Schicht von Leuchtdioden oder dergleichen emittiert und an der lichtundurchlässigen Hülle des Detektors zurück durch die Szintillatorschicht auf die lichtsensitiven Elemente reflektiert wird. Ein entsprechend aufgebauter Röntgendetektor ist z.B. in der WO 98/01992 beschrieben.

Die nichtlineare Inverse der nichtlinearen zweiten Kennlinie einer Verarbeitungseinheit wird vorzugsweise durch eine Polynomfunktion approximiert. Die Koeffizienten dieser Polynomfunktion können dann mit begrenztem Rechenaufwand und typischerweise durch Lösen linearer Gleichungssysteme bestimmt werden.

Die Inverse der ersten Kennlinie lässt sich in der Regel mit ausreichender Genauigkeit durch eine lineare Funktion approximieren, wobei für jeden zu einer bestimmten Verarbeitungseinheit gehörigen Bildsensor diese lineare Approximation wie folgt berechnet wird:

a) zunächst wird aus den durchgeführten Kalibrierungsmessungen für jeden Bildsensor eine Messkurve $K_{ij}$ gebildet, welche die Abhängigkeit des sekundären Bildsignals dieses Bildsensors von der Strahlungsmenge beschreibt,

b) sodann wird die gesuchte lineare Inverse $L_{ij}^{-1}$ der ersten Kennlinie des betrachteten Bildsensors als diejenige lineare Abbildung berechnet, die in Verknüpfung mit der unter a) bestimmten Messkurve gemäß $(K_{ij} \circ L_{ij}^{-1})$

1. einen vorgegebenen Strahlungsmengenwert $\varphi_0$ auf einen vorgegebenen sekundären Bildsignalwert $GW_0$ abbildet, d.h. $(K_{ij} \circ L_{ij}^{-1})(\varphi_0) = GW_0$, und

2. beim genannten Strahlungsmengenwert $\varphi_0$ eine vorgegebene Steigung $\alpha$ aufweist, d.h. $d(K_{ij} \circ L_{ij}^{-1})/d\varphi (\varphi_0) = \alpha$.

Insbesondere kann die lineare Inverse $L_{ij}^{-1}$ auch mittels einer linearen Regression berechnet werden, welche die beste Ausgleichsgerade für die Kalibrierungsmesswerte aus einem bestimmten Grauwerte-Intervall bestimmt.

Durch die in der geschilderten Weise bestimmten linearen Inversen $L_{ij}^{-1}$ werden alle in der Kalibrierung bestimmten Messkurven $K_{ij}$ an einem Punkt $(\varphi_0, GW_0)$ mit gleicher Steigung übereinander gelegt. An die hieraus resultierenden Bündel von zu ein und derselben Verarbeitungseinheit i gehörenden Messkurven lassen sich dann mit geeigneten mathematischen Verfahren nichtlineare Modellfunktionen anpassen.

Bei der Transformation von im realen Betrieb gewonnenen sekundären Bildsignalen zwecks Korrektur der individuellen Unterschiede in den Umwandlungscharakteristiken werden die genannten sekundären Bildsignale vorzugsweise zunächst mit der berechneten nichtlinearen Inversen der zweiten Kennlinie und anschließend mit der berechneten Inversen der ersten Kennlinie transformiert. Durch diese Reihenfolge wird zunächst die signalverändernde Wirkung der Verarbeitungseinheiten aufgehoben, und anschließend werden die durch die Bildsensoren selbst verursachten Unterschiede ausgeglichen. Eine derartige Korrektur der Nichtlinearitäten kann in Echtzeit durchgeführt werden, wobei sie vorteilhafterweise nur aus der einfachen und schnell durchführbaren Anwendung eines Polynoms oder Tabellen-Lookups pro Grauwert GW besteht.

Die betrachteten Bildsensoren können insbesondere für Röntgenstrahlung sensitiv sein. Indirekt konvertierende Bildsensoren haben dabei einen zweiteiligen Aufbau aus einer Szintillationsschicht, in welcher die einfallende Röntgenstrahlung in Lichtquanten umgewandelt wird, sowie einer lichtsensitiven Schicht (z.B. aus Fotodioden). Derartige indirekt konvertierende Bildsensoren können bei der Kalibrierung auch mit sichtbarem Licht bestrahlt werden, da dieses in der lichtsensitiven Schicht dieselben nachfolgenden Verarbeitungsprozesse auslöst wie von Röntgenquanten erzeugtes Szintillationslicht.

Das primäre von den Bildsensoren erzeugte Bildsignal kann insbesondere eine Ladungsmenge sein, welche von der nachgeschalteten Verarbeitungseinheit ausgelesen wird.

In der für mehrere Bildsensoren gemeinsamen Verarbeitungseinheit kann eine Verstärkung und gegebenenfalls eine Signalumwandlung des primären Bildsignals stattfinden. Die Signalumwandlung besteht dabei vorzugsweise aus der Umwandlung einer Ladungsmenge in ein Spannungssignal und anschließender Digitalisierung (Analog-Digital-Wandlung).

Die Erfindung betrifft ferner einen Röntgendetektor, welcher die folgenden Elemente enthält:

A) in Zeilen und Spalten angeordnete Bildsensoren zur Erzeugung primärer Bildsignale;

B) Verarbeitungseinheiten, an welche die Bildsensoren einer Spalte zur Erzeugung sekundärer Bildsignale am Ausgang der Verarbeitungseinheiten angeschlossen sind;

C) eine Datenverarbeitungseinheit, welche so eingerichtet ist, dass sie die von den Verarbeitungseinheiten erzeugten sekundären Bildsignale gemäß einem Verfahren der oben erläuterten Art in Bezug auf unterschiedliche Umwandlungscharakteristiken der Bildsensoren und/oder der Verarbeitungseinheiten korrigieren kann.

Die Datenverarbeitungseinheit kann somit insbesondere aus Kalibrierungsmessungen die nichtlinearen Inversen der Kennlinien der Verarbeitungseinheiten sowie die Inversen der Bildsensoren berechnen, und anschließend diese Inversen auf die im laufenden Betrieb gewonnenen Messwerte anwenden, um korrigierte Bilder zu berechnen, die von individuellen Unterschieden zwischen den Verarbeitungswegen der einzelnen Bildsensoren (Pixel) weitgehend befreit sind. Die Datenverarbeitungseinheit kann ihre Funktion insbesondere mit Hilfe geeigneter Computerprogramme (Software) ausüben, welche so erstellt ist, dass sie die Durchführung und Auswertung von Kalibrierungsmessungen sowie die anschließende Korrektur von realen Messwerten vornehmen kann. Der Röntgendetektor bzw. die Computerprogramme können vorteilhafterweise gemäß den beschriebenen Varianten des genannten Verfahrens weitergebildet sein.

Im Folgenden wird die Erfindung mit Hilfe der Figuren beispielhaft erläutert. Es zeigt:

Fig. 1 schematisch den Aufbau eines Röntgendetektors;

Fig. 2 schematisch zwei durch Kalibrierungsmessungen abgetastete nichtlineare Kennlinien zweier verschiedener Bildsensoren (Pixel).

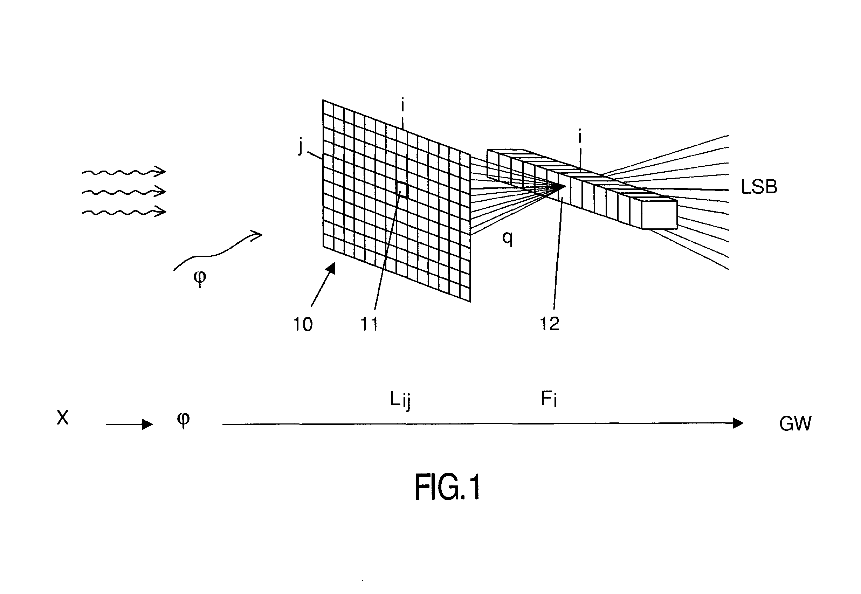

Figur 1 zeigt schematisch den Aufbau eines flachen dynamischen Röntgendetektors (FDXD). Der Röntgendetektor weist eine matrixförmige Sensoranordnung 10 aus einzelnen Bildsensoren 11 (Pixeln) auf, wobei die Bildsensoren 11 in Zeilen mit dem Index j und Spalten mit dem Index i organisiert sind. Die Bildsensoren 11 einer Spalte i sind dabei alle mit derselben Verarbeitungseinheit 12 verbunden, in welcher eine Verstärkung und Analog-Digital-Wandlung der von den Bildsensoren 11 ausgelesenen primären Bildsignale stattfindet. Die primären Bildsignale können insbesondere Ladungen q sein. Da die Bildsensoren 11 Zeile für Zeile ausgelesen werden, hat jede Verarbeitungseinheit 12 pro Auslesevorgang immer nur das Signal eines einzigen Bildsensors 11 zu verarbeiten, so dass es trotz der mehrfachen Zuständigkeit einer Verarbeitungseinheit 12 nicht zu Konflikten kommt. Am Ausgang der Verarbeitungseinheiten 12 liegen die nach außen abgegebenen sekundären Bildsignale GW vor, bei denen es sich um digitalisierte Grauwerte handelt.

In der Praxis kann die Sensoranordnung 10 aus konstruktiven Gründen aus einer oberen und einer unteren Hälfte aufgebaut sein, so dass jeweils nur Halbspalten über eine gemeinsame Verarbeitungseinheit ausgelesen werden. Dies ändert jedoch am Prinzip der vorliegenden Erfindung nichts und soll daher im Folgenden zur Vereinfachung weitgehend außer Betracht bleiben.

Beim Betrieb des dargestellten Röntgendetektors werden Röntgenstrahlen mit einer Dosis X auf die Bildsensoren 11 eingestrahlt, was dort zur Erzeugung von Ladungen q führt. Diese werden dann im erwähnten zeilenweisen Auslesevorgang von den Verarbeitungseinheiten 12 in die Grauwerte GW umgesetzt.

Die Bildsensoren 11 können insbesondere einen zweistufigen, indirekt konvertierenden Aufbau haben. Dabei erzeugt eine vorgelagerte Szintillatorschicht aus den einfallenden Röntgenquanten Lichtquanten, welche in der nachfolgenden lichtempfindlichen Schicht aus Fotodioden in elektrische Signale (Ladungen q) umgewandelt werden. Aufgrund der Lichtempfindlichkeit der Fotodioden können diese auch durch sichtbares Licht der Dosis $\varphi$ angeregt werden. Dieses Licht kann insbesondere mit Hilfe der aus der WO 98/01992 bekannten Rücksetzlicht-Vorrichtung im Detektor erzeugt werden.

Die folgende Tabelle 1 fasst die im Röntgendetektor gemäß Figur 1 stattfindenden Umwandlungsschritte zusammen:

| Röntgenstrahlung X | Szintillator: Verstärkung $s_{ij}$ | Photonen | Fotodioden: Offset $o_{ij}$ | Ladung q | Verstärker: Verstärkung $F_i(q)$ | Spannung u | Analog-Digital-Wandlung | Graustufen GW |
|---|---|---|---|---|---|---|---|---|
| | Bildsensor 11: $q = L_{ij}(X) = s_{ij} X + o_{ij}$ | | | | Verarbeitungseinheit 12: $GW = F_i(q)$ | | | |

Tabelle 1

Hierbei sind der Szintillator und die Fotodioden zu einem Bildsensor 11 zusammengefasst, von dem es sich gezeigt hat, dass er sehr gut durch eine lineare Kennlinie $L_{ij}$ mit dem Offset $o_{ij}$ und der Verstärkung $s_{ij}$ beschrieben werden kann. Vernachlässigt werden dabei räumliche Unterschiede in der Verstärkung der Fotodioden. Der beschriebene Ansatz lässt sich jedoch ohne Weiteres auch auf individuell verschiedene Verstärkungen der Fotodioden verallgemeinern.

Jeweils eine Spalte i (in der Praxis können die Spalten wie erwähnt noch jeweils in eine obere beziehungsweise untere Hälfte eingeteilt sein) der Sensoranordnung 10 wird durch einen Ladungsverstärker in eine Spannung umgewandelt und gegebenenfalls nach einem "Multiplexing" durch einen Analog-Digital-Wandler zu einem Grauwert GW quantisiert. Diese Elemente sind in Figur 1 zu den Verarbeitungseinheiten 12 zusammengefasst. Der Ladungsverstärker zeigt eine sehr geringe Nichtlinearität, die für sich genommen unerheblich ist. Unterschiede zwischen den Nichtlinearitäten benachbarter Spalten sind dagegen sehr auffällig, da sie einer Kante im Bild gleichkommen, für die das menschliche visuelle System sehr empfindlich ist. Diese Nichtlinearitätsunterschiede fallen vor allem bei der Digitalen Subtraktions-Angiographie (DSA) störend auf, weil dort unter anderem eine starke Spreizung des Grauwertkontrastes vorgenommen wird. Bei der DSA wird z.B. die Differenz einer Gefäßaufnahme ohne Kontrastmittel und einer Gefäßaufnahme mit Kontrastmittel gebildet.

Bei den im Stand der Technik bekannten Echtzeit-Verfahren zur Korrektur von Röntgenbildern werden die lokal unterschiedlichen Dunkelströme der Fotodioden (Offset) und die lokal unterschiedlichen Empfindlichkeiten der Szintillatorschicht (Gain) durch Abzug eines Dunkelbildes und anschließende Division durch ein Empfindlichkeitsbild entfernt. Dies entspricht der Anwendung einer linearen Transformation. Schließlich werden defekte Pixel, Zeilen und Spalten in diesen korrigierten Bildern durch Interpolation überbrückt. Darüber hinaus kann z.B. durch zwischengeschaltete (intermediate) Dunkelbilder auch ein sehr großer Anteil des Nachleuchtens des Szintillators sowie der "Residual Signals" der Photodioden entfernt werden.

Die nachfolgende Tabelle 2 zeigt schematisch die derzeit implementierten Korrekturschritte, die in Echtzeit an den aufgenommenen Rohbildern eines FDXD vorgenommen werden. Hierbei wird insgesamt eine lineare Kennlinie angenommen. Es wird zuerst ein gemitteltes Dunkelbild von den Rohbildern abgezogen. Danach wird gegebenenfalls eine zeitlich variable Dunkelbildverschiebung aufgrund von Nachleuchten der Szintillatorschicht und/oder "Residual Signals" der Photodioden mit Hilfe von zwischengeschalteten (intermediate) Dunkelbildern korrigiert (vgl. DE 196 31 624 C1). Sodann erfolgt eine Division durch ein gemitteltes, offset-korrigiertes, homogen belichtetes Bild und eine abschließende Interpolation von Defekten. Insgesamt ergeben sich bei diesem Verfahren sowohl für die mittlere als auch für die maximale Nichtlinearitäts-Differenz, also für die Differenz der Grauwerte von Pixeln aus benachbarten Spalten dividiert durch ihren Mittelwert, eine Überschreitung der tolerierbaren Grenzen um ein Vielfaches.

| Rohbild | Offset-Subtraktion | Korrektur für zeitliche Artefakte | Verstärkungs-Division | Interpolation von Defekten | Korrigiertes Bild |
|---|---|---|---|---|---|

Tabelle 2

Da sich gezeigt hat, dass die lineare Korrektur für bestimmte Fälle wie insbesondere die DSA nicht ausreichend ist, wird erfindungsgemäß ein verbessertes Korrekturverfahren vorgeschlagen, welches auch eine nichtlineare Korrektur beinhaltet. Durch eine geeignete Beschränkung des Aufwandes gelingt es dabei, das Korrekturverfahren trotz der Verbesserung noch für die Anwendung in Echtzeit geeignet zu machen und die zur Korrektur benötigten Kennlinien präzise und mit vertretbarem Aufwand zu bestimmen.

Das Verfahren beruht auf der Erkenntnis, dass die Hauptursache für die im Röntgendetektor auftretenden Nichtlinearitäten in der Kennlinie des Ladungsverstärkers und A/D-Wandlers (Verarbeitungseinheit 12) liegt. Erfindungsgemäß wird durch eine noch zu beschreibende Kalibration die nichtlineare Inverse $F_i^{-1}$ dieser Kennlinie sowie die Inverse der als linear angenommenen Kennlinie $L_{ij}$ der Sensoranordnung 10 berechnet. Anschließend werden die Korrekturen in genau der entgegengesetzten Reihenfolge angewendet, in der die Artefakte in das Bild eingefügt werden. Diese Reihenfolge der Korrekturschritte ist in der nachfolgenden Tabelle 3 aufgeführt:

| Rohbild | Korrektur für Nichtlinearität (spaltenweise) | Offset-Subtraktion (pixelweise) | Korrektur für zeitliche Artefakte (pixelweise) | Division durch Verstärkung (pixelweise) | Interpolation von Defekten (pro Defekt) | Korrigiertes Bild |
|---|---|---|---|---|---|---|

Tabelle 3

Wie am unteren Rand von Figur 1 dargestellt ist, wird eine Röntgendosis X in der Szintillatorschicht in eine Lichtmenge φ umgewandelt. Diese Lichtmenge wird dann mit einer linearen Abbildung $L_{ij}$ pixelweise von der Sensoranordnung 10 in Ladungssignale q umgewandelt, welche ihrerseits spaltenweise mit einer nichtlinearen Abbildung $F_i$ durch die Verarbeitungseinheiten 12 in Grauwerte GW umgewandelt werden. Im Folgenden wird ein Kalibrierungsverfahren beschrieben, mit dessen Hilfe Approximationen für die Inversen der nichtlinearen Funktionen $F_i$ sowie der linearen Abbildungen $L_{ij}$ berechnet werden können.

Für die Kalibration bietet sich die Zuhilfenahme des sogenannten Rücksetzlichtes (Backlight oder Reset-Light) an, da hierfür keine Röntgenstrahlung benötigt wird. Das nachfolgende Prinzip lässt sich jedoch mühelos auch auf die Benutzung von Röntgenstrahlen für die Kalibration übertragen. Zur gleichzeitigen Ermittlung der Kennlinien $F_i$ für alle Ladungsverstärker i werden homogen (mit Backlight) belichtete Bilder für eine geeignete Anzahl von typischerweise 60 verschiedene Werte $φ_k$ zwischen der minimal einstellbaren Dauer des Rücksetzlichtes (zum Beispiel eine μs) und der maximal erlaubten Dauer (zum Beispiel 60 μs) aufgenommen. Die zugehörigen Grauwerte $GW_{ijk}$ decken dann nach unten hin den messbaren Bereich ab. Nach oben hin muss die maximale Dauer des Rücklichtes so gewählt werden, dass zumindest der Bereich bis zur maximalen linearen Dosis bzw. zur maximal nutzbaren Dosis des Detektors abgedeckt ist, aber die Sättigung noch nicht erreicht wird. Elektronikrauschen wird bei dieser Aufnahme von Kalibrierungsdaten dadurch verringert, dass über eine geeignete Anzahl von zum Beispiel zehn Bildern gemittelt wird. Darüber hinaus werden zum Beispiel zehn Dunkelbilder sowie zum Beispiel zehn homogen mit Röntgenstrahlung belichtete Bilder aufgenommen und ebenfalls gemittelt. Abweichend vom Stand der Technik wird das gemittelte, homogen belichtete Bild aber nicht durch Abzug des Dunkelbildes Offset-korrigiert.

Der (unbekannte) mathematische Zusammenhang zwischen dem Grauwert GW und der eingestrahlten Menge $\varphi$ an Rücklicht lautet:

$$GW_{ij}(\varphi) = F_i(L_{ij}(\varphi))$$

Für die Inversen $F_i^{-1}$ der nichtlinearen Funktionen $F_i$ wird dann ein Ansatz mit geeigneten Basisfunktionen und für die Abbildungen $L_{ij}$ ein linearer Ansatz gemacht, wobei die Approximationsfunktionen jeweils durch eine Reihe unbekannter Parameter beschrieben werden. Aus den oben erläuterten Kalibrierungsmessungen steht ferner eine Menge von Wertpaaren $\{(GW_{ijk}, \varphi_k)\}$ zur Verfügung, welche die gemessenen Grauwerte $GW_{ijk}$ bei verschiedenen Lichtmengen $\varphi_k$ beschreiben.

Aus der Menge der Messwerte und den obigen Ansätzen für die Funktionen $F_i^{-1}$ und $L_{ij}$ lassen sich dann mit einem geeigneten mathematischen Anpassungsverfahren die unbekannten Parameter und damit die Funktionen bestimmen.

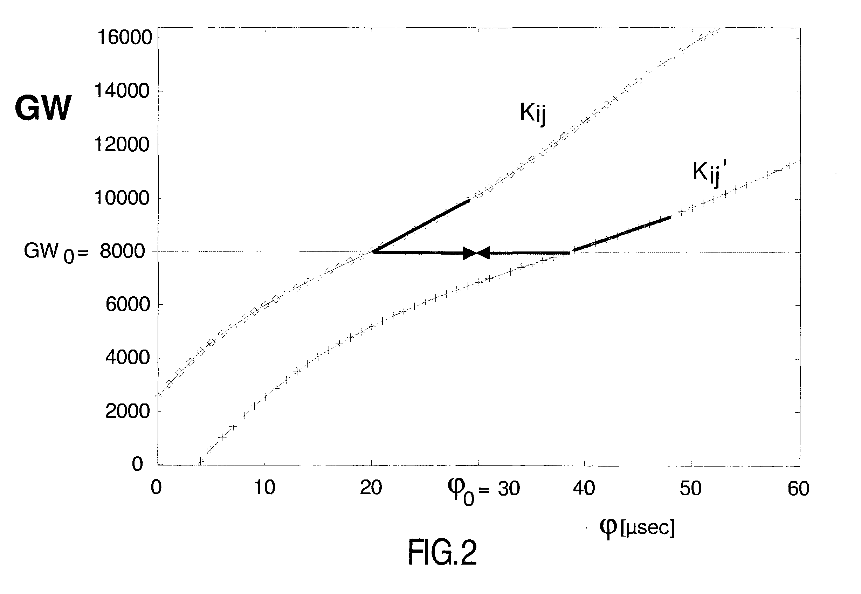

Nachfolgend soll unter Bezugnahme auf Figur 2 ein spezielles Verfahren zur Bestimmung der unbekannten Funktionen $F_i^{-1}$ und $L_{ij}$ beschrieben werden. In Figur 2 ist der zu zwei Pixeln aus einer (Halb-)Spalte gehörige Teil dieser Kalibrierungsdaten dargestellt, wobei auf der horizontalen Achse die Lichtmenge $\varphi$ (ausgedrückt in der zeitlichen Belichtungsdauer) und auf der vertikalen Achse der Grauwert GW aufgetragen ist. Alle zu einem bestimmten Pixel gehörigen Messwerte sind durch eine Ausgleichslinie verbunden, so dass sich zwei Kurven $K_{ij}$ und $K_{ij'}$ ergeben. Diese beiden Kurven stellen somit die Kennlinien von zwei Pixeln aus derselben Spalte i und zwei unterschiedlichen Zeilen j und j' dar. Die Nichtlinearität ist übertrieben dargestellt, sie ist für reale FDXD sehr viel kleiner. Dabei wird von einer guten lokalen Linearität der Verstärker beziehungsweise Analog-Digital-Wandler z.B. in der Mitte des Dynamikbereiches ausgegangen, das heißt in Bezug auf Figur 2 knapp oberhalb von GW = 8192 bei einer 14-Bit-Wandlung. Die Photodioden liefern als Ladung neben einem konstanten Offset eine Anzahl von Elektronen, die der Rücklichtdauer direkt proportional ist, und diese Ladung wird verstärkt und quantisiert, so dass sich der folgende Zusammenhang ergibt:

$$GW_{ij}(\varphi) = F_i(s_{ij}\varphi + o_{ij})$$

Ausgehend von den in Figur 2 dargestellten Daten wird nun folgendes Verfahren durchgeführt:

1. Die unbekannten Offsets $o_{ij}$ für jeden Pixel werden durch Verschiebung der gemessenen Kurven entlang der $\varphi$-Achse normiert, die unbekannte Empfindlichkeit für jeden Pixel wird durch Strecken oder Stauchen der $\varphi$-Achse normiert. Hierzu wird oberhalb einer Schwelle (z.B. $GW_0 = 8192$) eine lineare Regression an z.B. 10 Punkten durchgeführt. Die gemessenen Kurven werden dann so verschoben, dass sie bei einem festen $\varphi$-Wert (z.B. $\varphi_0 = 30\,\mu s$) den Schwellwert $GW_0$ schneiden. Danach wird die Steigung bei diesem $\varphi$-Wert durch Skalierung der $\varphi$-Achse (z.B. auf 175 GW/$\mu s$) normiert. Insgesamt entsteht so für jedes Pixel ein Offset $o_{ij}$ und eine Skalierung $s_{ij}$. Eine Sonderbehandlung verhindert dabei Probleme an defekten Pixeln.

2. Die Kennlinien aller Pixel einer (Halb-)Spalte i liegen danach mit gleicher Steigung übereinander (in Figur 2 durch Verschiebungspfeile angedeutet). Die "beste Schätzung" für die gemeinsame inverse Kennlinie $F_i^{-1}$ wird nun durch Anpassung einer Modellfunktion mit einer Anzahl von freien Parametern $c_{iv}$ bestimmt. Als Modellfunktion bietet sich ein einfaches Polynom mit z.B. 6 Termen an, wobei die Grauwerte aus Stabilitätsgründen auf das Intervall [0:2] abgebildet werden:

$$F_i^{-1}(GW) = \sum_{v=0}^{5} c_{iv} * \left(\frac{GW}{GW_0}\right)^v$$

Im Detail können an Stelle einfacher Polynome auch Tschebyscheff-Polynome verwendet werden. Minimiert wird dann im quadratischen Mittel der Abstand der Fit-Funktion $F_i^{-1}$ von den Punktepaaren $\{GW_{ijk}, o_{ij} + s_{ij}\varphi_k\}$, wobei alle Pixel i, j einer (Halb-)Spalte i verwendet werden. Da es sich hierbei um eine lineares Modell handelt, ist die Anpassung der Modellfunktion an die Daten analytisch lösbar, d.h. durch Lösen eines Gleichungssystems exakt bestimmbar.

3. Anschließend werden die Koeffizienten $c_{iv}$ (Parameter) für jede (Halb-)Spalte gespeichert. Das gemittelte Dunkelbild wird mit Hilfe der optimalen Approximation abgebildet, ebenso wie das gemittelte, homogen belichtete Bild. Das Gainbild ergibt sich dann als die Differenz dieser abgebildeten (linearisierten) Bilder.

Im Block "Korrektur für Nichtlinearität" aus Tabelle 3 wird nun jedes Rohbild mit Hilfe des Polynoms $F_i^{-1}$ abgebildet (linearisiert). Im Block "Offset-Subtraktion" wird dann das linearisierte, gemittelte Dunkelbild abgezogen, und im Block "Division durch Verstärkung" durch das vorstehend in 3. beschriebene Gainbild dividiert.

**Patentansprüche**

1. Verfahren zur Korrektur unterschiedlicher Umwandlungscharakteristiken bei der Verarbeitung der Signale von flächig verteilt angeordneten Bildsensoren,
wobei

   a) die Bildsensoren jeweils mit einer ersten Kennlinie aus einer empfangenen Strahlungsmenge ein primäres Bildsignal erzeugen;
   b) die primären Bildsignale mehrerer Bildsensoren jeweils derselben Verarbeitungseinheit mit einer zweiten, nichtlinearen Kennlinie zugeführt werden, um entsprechende sekundäre Bildsignale zu erzeugen;
   c) die Inversen der ersten Kennlinien und die nichtlinearen Inversen der zweiten Kennlinien aus Kalibrierungsmessungen zumindest näherungsweise bestimmt werden;
   d) von den Verarbeitungseinheiten erzeugte sekundäre Bildsignale mit den in Schritt c) gewonnenen Inversen transformiert werden.

2. Verfahren nach Anspruch 1,
   **dadurch gekennzeichnet,**
   **dass** die Bildsensoren in Zeilen und Spalten angeordnet sind, wobei alle Bildsensoren derselben Spalte oder Halbspalte an eine gemeinsame Verarbeitungseinheit angeschlossen sind.

3. Verfahren nach Anspruch 1,
   **dadurch gekennzeichnet,**
   **dass** die Kalibrierungsmessungen die homogene Bestrahlung der Bildsensoren mit bekannten Strahlungsmengen zwischen Null und einem Maximalwert beinhalten.

4. Verfahren nach Anspruch 3,
   **dadurch gekennzeichnet,**
   **dass** die homogene Bestrahlung der Bildsensoren eines Röntgendetektors mit lichtsensitiven Elementen mittels Röntgenlicht oder mittels sichtbarem Licht erfolgt, wobei das sichtbare Licht vorzugsweise von Rücklichteinheiten erzeugt wird.

5. Verfahren nach Anspruch 1,
   **dadurch gekennzeichnet,**
   **dass** die nichtlinearen Inversen der zweiten Kennlinien durch eine Polynomfunktion approximiert werden.

6. Verfahren nach Anspruch 1,
   **dadurch gekennzeichnet,**
   **dass** die Inversen der ersten Kennlinien durch jeweils eine lineare Funktion approximiert werden, welche wie folgt berechnet wird:

   a) aus den Kalibrierungsmessungen wird pro Bildsensor eine Messkurve $K_{ij}$ gebildet, welche die Abhängigkeit des sekundären Bildsignals von der Strahlungsmenge $\varphi$ beschreibt;
   b) die gesuchte Inverse der ersten Kennlinie des jeweiligen Bildsensors wird als diejenige lineare Abbildung $L_{ij}^{-1}$ berechnet, die in Verknüpfung mit der Messkurve gemäß $K_{ij} \bigcirc L_{ij}^{-1}$

   - einen vorgegebenen Strahlungsmengenwert $\varphi_0$ auf einen vorgegebenen sekundären Bildsignalwert $GW_0$ abbildet, und

- beim vorgegebenen Strahlungsmengenwert $\varphi_0$ eine vorgegebene Steigung aufweist.

7. Verfahren nach Anspruch 1,
   **dadurch gekennzeichnet,**
   **dass** von den Bildsensoren gewonnene sekundäre Bildsignale zunächst mit der zugehörigen nichtlinearen Inversen der zweiten Kennlinie und dann mit der Inversen der ersten Kennlinie transformiert werden.

8. Verfahren nach Anspruch 1,
   **dadurch gekennzeichnet,**
   **dass** die Bildsensoren für Röntgenstrahlung sensitiv sind.

9. Verfahren nach Anspruch 1,
   **dadurch gekennzeichnet,**
   **dass** in der gemeinsamen Verarbeitungseinheit eine Verstärkung und gegebenenfalls Signalumwandlung stattfindet, vorzugsweise eine Umwandlung einer Ladungsmenge in ein Spannungssignal und eine Analog-Digital-Wandlung.

10. Röntgendetektor, enthaltend

    A) in Zeilen und Spalten angeordnete Bildsensoren zur Erzeugung primärer Bildsignale;

    B) Verarbeitungseinheiten, an welche die Bildsensoren einer Spalte oder Halbspalte zur Erzeugung sekundärer Bildsignale angeschlossen sind;

    C) eine Datenverarbeitungseinheit, welche derart eingerichtet ist, dass sie die von den Verarbeitungseinheiten erzeugten sekundären Bildsignale gemäß einem Verfahren nach mindestens einem der Ansprüche 1 bis 9 in Bezug auf unterschiedliche Umwandlungscharakteristiken der Bildsensoren und/oder der Verarbeitungseinheiten korrigieren kann.

FIG.1

FIG.2

**Europäisches Patentamt**

**Nummer der Anmeldung**

EP 02 10 2385

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 97 48225 A (SIMAGE OY ;CAO TIELANG (FI); PYYHTIAE JOUNI ILARI (FI); SPARTIOTIS) 18. Dezember 1997 (1997-12-18) * Seite 2, Zeile 6 - Seite 5, Zeile 3 * * Seite 9, Zeile 22 - Seite 19, Zeile 14 * --- | 1-5,8-10 | H04N5/217 H04N5/32 |
| A | POROPAT G V: "NONLINEAR COMPENSATION FOR RESPONSIVITY NONUNIFORMITIES IN CADMIUM MERCURY TELLURIDE FOCAL PLANE DETECTOR ARRAYS FOR USE IN THE 8 TO 12 M SPECTRAL REGION" OPTICAL ENGINEERING, SOC. OF PHOTO-OPTICAL INSTRUMENTATION ENGINEERS. BELLINGHAM, US, Bd. 28, Nr. 8, 1. August 1989 (1989-08-01), Seiten 887-896, XP000047283 ISSN: 0091-3286 * Seite 888, Absatz 2. * * Seite 890, rechte Spalte, Zeile 9 - Zeile 28 * * Seite 892, Absatz 4. * --- | 1,5,9,10 | |

**RECHERCHIERTE SACHGEBIETE (Int.Cl.7)**

H04N

Der vorliegende Recherchenbericht wurde für alle Patentansprüche erstellt

| Recherchenort | Abschlußdatum der Recherche | Prüfer |
|---|---|---|
| DEN HAAG | 19. Februar 2003 | Wentzel, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 10 2385

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2003

| Im Recherchenbericht angeführtes Patentdokument | Datum der Veröffentlichung | Mitglied(er) der Patentfamilie | Datum der Veröffentlichung |
|---|---|---|---|
| WO 9748225 A | 18-12-1997 | GB 2314227 A | 17-12-1997 |
| | | AU 3033397 A | 07-01-1998 |
| | | WO 9748225 A1 | 18-12-1997 |
| | | EP 0904655 A1 | 31-03-1999 |
| | | JP 2000513518 T | 10-10-2000 |
| | | NO 985823 A | 15-02-1999 |

EPO FORM P0461

Für nähere Einzelheiten zu diesem Anhang : siehe Amtsblatt des Europäischen Patentamts, Nr.12/82